# EUROPEAN PATENT APPLICATION

(11) **EP 4 465 080 A2**
(43) Date of publication of application: **20.11.2024**
(21) Application number: 24176467.9
(22) Date of filing: 16.05.2024
(51) Int. Cl.: G01S 7/481, G01S 7/03, G01S 13/02

(54) **OPTICAL BEAM FORMING DEVICE WITH CROSSBAR AS BEAMFORMER AND ITS METHOD OF USE**

(30) Priority: 16.05.2023 GR 20230100400
(71) Applicant: Aristotle University Of Thessaloniki-Eidikos Logariasmos Kondilion Erevnas E.L.K.E., 54636 Thessaloniki (GR)
(72) Inventor: PLEROS, NIKOLAOS, 54124 Thessaloniki (GR); MAXIMIDIS, RONIS, 55132 Thessaloniki (GR); TSAKYRIDIS, APOSTOLOS, 54640 Thessaloniki (GR); MORALIS-PEGIOS, MILTIADIS, 54352 Thessaloniki (GR); GIAMOUGIANNIS, GEORGIOS, 54642 Thessaloniki (GR)
(74) Representative: Petsis, Christos

(57) **Abstract**

Optical beamforming device for multiple beams incorporating a universal optical linear crossbar architecture by means whereof the beams are controlled independently in terms of their amplitude and phase, remarkable in that it comprises a photonic crossbar linear optical circuit architecture comprising a coherent multiport interferometer on which it relies; and method for carrying out said device wherein an 1:N splitter (1) followed by N elo modulators (2) provides N parallel optical signals that get subsequently launched into the Xbar matrix, with every signal entering through a respective waveguide row. Each row employs an optical coupling stage to every matrix column, so that part of the modulated optical signal gets forwarded into the respective column, the remaining part continues to the next column. The intra-column beams are then entering respective Variable Amplitude and Phase (VAP) modulation blocks designed as forming Xbar nodes (4), with each of them comprising an optical amplitude modulator followed by a phase modulator, thus generating the amplitude and phase adjustment of the propagating beam. After exiting the Xbar node, the intra-column optical beams are forced to coherently recombine in a N:1 recombination stage comprising a binary tree of 3dB-couplers. More specifically, the N signals recombine sequentially in clusters of two at every combination stage until reaching the single waveguide output connected to a radiating element. This leads to the radiation from every i-th column of a sum of N orthogonal modulated amplitude- and phase- adjusted optical sub-signals The over-the-air combination of M radiated signals each consisting of N orthogonal signals leads to the generation of N radiating beams with each beam generated by an algebraic summation of orthogonal modulated sub-signals corresponding to every input port.

## Description

### Field of the invention

The present invention relates to an optical beam forming device incorporating a universal optical linear crossbar architecture which allows independent control of the beams, in terms of beamformer amplitude and phase.

### Background of the invention

To offer a certain degree of "smartness", antenna array architectures must include advanced reconfigurable beamforming networks which make them capable of various kinds of flexible and real-time radiation direction controls. Multiple radiating beams can be created splitting the signals of each beamformer input and their independent processing by variable processing units before they are summed.

### Prior art

The development of multiple beams and reconfigurable active arrays is tightly connected to that of so-called Beam Forming Networks referred to hereafter as BFNs. Two main categories of beamforming networks can be identified : fixed or "static" BFN's and reconfigurable or "agile" BFN's. Examples of fixed or "static" BFN's are : Blass matrix, presented by J. Blass in "Multidirectional antenna : a new approach to stacked beams", in Proc. IRE Int. Conv. Rec., 1960, vol. 8, pp. 48-50; and by C. Tsokos et al. in "Analysis of a Multibeam Optical Beamforming Network Based on Blass Matrix Architecture," in Journal of Lightwave Technology, vol. 36, No. 16, pp. 3354-3372, 15 Aug. 2018; Nolen matrix, presented by J. Nolen in " Synthesis of multiple beam networks for arbitrary illuminations", Ph.D. dissertation, Radio Division, endix Corp., Baltimore, MD, USA, Apr. 1965 [1] ; and Butler matrix, presented by J. Butler et. al. in "Beam-forming matrix simplifies the design of electronically scanned antennas", Electron. Des., vol. 9, 1961.

The Blass and Butler matrix can also be enhanced to support the generation of reconfigurable or "agile" BFN's. The main drawback of these matrixes is that the processing units' outputs are progressively summed; therefore the multiple beams have to be designed simultaneously and so the processing units weightings need to be constantly recalculated. This can become very challenging for large beamformers, especially if a large number of beams need to be steered independently.

The Xbar as linear crossbar operator including the so-called WDM version is disclosed in US 2022/0044092 A1, US 2022/0012582 A1; US 2022/0045757 A1 wherein a first application of a system including the Xbar as linear operator including the WDM version is disclosed, and US 2022/0263582 A1 wherein the "optical beamformer network" is referred to as an example of a possible application.

The Xbar WDM operation is presented in A. Totovic et al., "Programmable photonic neural networks combining WDM with coherent linear optics", Nature Sci Rep 12, 5605 (2022).

Neuromorphic photonic experiments referred to hereafter are set out in G. Mourgias-Alexandris et al, "A Silicon Photonic Coherent Neuron with 10GMAC/Sec Processing Line-Rate, Tu5H.1 OFC 2021.

F. Monticone and A. Alù disclose in Proceedings of the IEEE, vol. 103, No. 5, pp. 793-821, May 2015, doi: 10.1109/JPROC.2015.2399419) "Leaky-Wave Theory, Techniques, and Applications: From Microwaves to Visible Frequencies".

XP093123423 of GIAMOUGIANNIS George et al. 1514/2023 discloses "A Coherent Photonic Crossbar for Scalable Universal Linear Optics", in Journal of Lightwave Technology, doi: 10.11091/JLT.2023.3234689.

### Aim of the invention

The aim of the invention is to overcome the abovementioned drawback of the multibeam beamformer matrices by adopting the Xbar linear operator as an optical beamformer. This Xbar optical beamformer has independent processing units though it removes the requirement for simultaneous beam generation and control of currently adopted multibeam beamformers, such as in Nolen, Blass, and Butler referred to above.

### Summary of the invention

It is proposed according to the present invention an optical beam forming device with a crossbar as an optical and microwave beamformer with an optical beamforming architecture, adopting a universal optical linear crossbar architecture, with each of Xbar node, processing unit, comprised of independent amplitude and phase modulators. A single-column crossbar layout has already been demonstrated in a small-scale 4x1 version in preliminary linear operation experiments for neuromorphic photonics applications offering low-loss and high accuracy metrics due to the non-cascaded configuration of the phase-shifter nodes, esp. as it is shown in G. Mourgias-Alexandris et. al., "A Silicon Photonic Coherent Neuron with 10GMAC/Sec Processing Line-Rate, Tu5H.1 OFC 2021 referred to above.

According to a main embodiment of the device according to the invention, there is proposed an optical beamforming device for multiple beams incorporating a universal optical linear crossbar architecture by means whereof beams are generated, that are controlled independently in terms of their amplitude and phase, which is remarkable in that said beams are orthogonal and in that it comprises a photonic crossbar linear optical circuit architecture comprising an over-the-air coherent multiport interferometer on which it relies.

The photonic Xbar linear optical circuit architecture relies on a coherent multiport interferometer and is illustrated when configured to operate within a single-wavelength optical matrix-vector multiplication engine, with the input vector X formed by an array of parallel elo modulation stages located directly after a 1 : N front-end splitter stage 1.

XP093123423 discloses input signals that are not orthogonal: they coherently sum at the output of the columns, and they are not radiated and combined over- the-air. This is in contrast with the present invention, wherein N input signals are orthogonal, resulting in that the sub-signals do not coherently add at the column output, and the signals at the columns output are radiated. Therefore, thanks to the device according to the invention, for every orthogonal signal, its sub-signals coherently add over-the-air generating a beam. In this way, for N orthogonal input signals, N beams are generated.

US11 644 544 and US2021/278537 disclose Lidars incorporating beamforming arrays. The difference between these documents and the invention as defined above consists of how the beamforming is implemented. A problem to solve is how to improve beamforming from these Lidars. XP093123423 yet reveals the crossbar designated as Xbar, but in a different technical field, linear algebra, optical signal processing.

According to a particular embodiment of the invention, one-to-one mapping between intended beam amplitude/phase adjustment values and respective Xbar matrix node entry is supported, by means whereof the advantage that beams interdependencies and amplitude and phase values recalculations are avoided, is achieved.

According to an additional embodiment of the invention, a completely reconfigurable amplitude and phase matrix is sustained with zero phase and amplitude errors, as all the phase and amplitudes can be calibrated independently.

According to a further embodiment of the invention, additional beam shaping capabilities are supported, wherein Variable Amplitude and Phase VAP modulation blocks are hosted instead of simple phase modulation elements, thereby using amplitude modulation segments for facilitating side lobe suppression. Indeed, additional beam shaping capabilities can be supported, since the capability to host VAP modulation blocks instead of simple phase modulation elements can utilize the amplitude modulation segments for significantly facilitating side lobe suppression.

According to a still further embodiment of the invention, a high loss- and phase-induced fidelity architecture is supported, enabling a robust circuit layout yielding a match between the targeted and the experimentally obtained linear transformation. Thanks to the device according the invention, the Xbar architecture supports a high loss- and phase-induced fidelity, enabling a robust circuit layout through which a perfect match between the linear transformation that is aimed at, on the one hand, and the linear transformation that is achieved experimentally, on the other hand, can be accomplished.

The Xbar configuration thus shown offers the lowest insertion loss IL performance compared to the Single Value Decomposition SVD-Clements topology, which has been considered until recently to comprise the optimal linear optical circuit architecture, thereby revealing that the IL performance gap can reach close to 60 dB in the case of 64x64 matrix arrangements assuming 1dB losses per node. The fabricated silicon-based chip implements a single Xbar column and has been used for validating experimentally its successful operation as a matrix-vector multiplying engine in neuromorphic photonic experiments as shown in G. Mourgias-Alexandris et al., "A Silicon Photonic Coherent Neuron with 10GMAC/Sec Processing Line-Rate, Tu5H.1 OFC 2021 referred to above.

In addition, the Xbar beamformer can be used in the reverse direction with signal entering M columns consequentially split by 1:N recombination stage that comprises a binary tree of optical Multi Mode interferometer MMI or directional splitters to generate N beams from M signal entering to M output ports. Each of the intra-column optical signals is then entering respective Variable Amplitude and Phase VAP modulation blocks, designated as Xbar nodes, with each of them comprising an optical amplitude modulator followed by a phase modulator, allowing in this way the amplitude and phase adjustment of the intra-column optical signals. After the Xbar node, the signals are combined in rows with the combing ratio guarantying the equal amplitude combination ratio leading to the generation of N independent beams.

The present invention also relates to a method for carrying out the device, resp. system above, where N parallel optical signals modulated by orthogonal electric signals are launched into the Xbar matrix, with every orthogonal modulated optical signal entering through a respective waveguide row. Each of the rows employs an optical coupling stage to every matrix column, so that part of the orthogonal modulated optical signal gets forwarded into the respective column, while the remaining part is allowed to continue to the next column. In this way, each orthogonal modulated optical signal is subdivided into M intra-column optical signals. Each of the intra-column optical signals is then entering respective Variable Amplitude and Phase VAP modulation blocks, designated as Xbar nodes, with each of them comprising an optical amplitude modulator followed by a phase modulator, allowing in this way the amplitude and phase adjustment of the intra-column optical signals. After exiting the Xbar node, the intra-column optical signal is then combined in an N:1 combination stage that comprises a binary tree of couplers, esp. 3dB couplers.

More specifically, the N signals recombine sequentially in clusters of two at every combination stage until reaching the single waveguide output connected to a radiating element. This leads to the radiation from every i^{th} column of a sum of N orthogonal modulated amplitude and phase adjusted optical sub-signals. For every orthogonal signal, its sub-signals radiated by each column will coherently add over-the-air generating a beam. In this way for N orthogonal input signals N beams will be generated.

According to a more particular embodiment of the method of the invention, the Xbar layout naturally extends the 1:M Optical Phase Array OPA paradigm into a NxM Optical Amplitude and Phase Matrix OAPM configuration through an overall 1:M splitting of the input modulated beams.

According to an alternative embodiment thereof, said Xbar layout naturally extends the 1:M Optical Phase Array OPA paradigm into a NxM Optical Amplitude and Phase Matrix OAPM configuration through the use of N:1 recombination stages within every column, without requesting the employment of N different wavelengths and WDM technology for expanding to N rows.

In simple terms, the Xbar layout naturally extends the successful and powerful 1:M Optical Phase Array OPA paradigm into a NxM Optical Amplitude and Phase Matrix OAPM configuration through an overall 1:M splitting of each of N orthogonal input modulated signals and the use of N:1 recombination stages within every column, without requesting the employment of N different wavelengths and WDM technology for expanding to N rows, as has been the case in C. Tsokos, et al. "Optical Beamforming Network for Multi-Beam Operation With Continuous Angle Selection." PTL (2019) [1]. This allows for an optical Multi Beam Forming Network (MBFN) technology, wherein one-to-one mapping between intended beam amplitude/phase adjustment values and respective Xbar matrix node entry is supported, providing the advantage to avoid beams interdependencies and unnecessary amplitude and phase recalculations.

The present invention also relates to a method of use of the Xbar linear operator as a receiver supporting the generation of multiple independently controlled orthogonal radiated beam. The use of Xbar topology is thus remarkably proposed for the generation of multiple simultaneous beams and independent control of beams directions.

Said optical beamformer can be used as optimal "smart" microwave optical beamforming architecture. It was shown that by homodyne mixing of a single sideband optically modulated signal with the original optical signal, the phase changes imposed by the optical beamformer can be transferred to the RF domain through said substantially uniform mixing. Employing this technique, the Xbar optical beamformer of the previous section can be used as an efficient microwave optical beamformer.

The WDM Xbar architecture is suitable for multi-beam WDM operation as well. The single wavelength laser source is replaced by a WDM-Laser source and every column is equipped with a set of multiplexing/demultiplexing stages where each wavelength is injected into a distinct set of weight modulator and phase shifter for individual beam shaping and beam steering, respectively. The WDM Xbar can be used as a WDM-empowered beamformer to increase the beams count.

In the frame of the Xbar WDM operation, a multibeam lidar is developed based on the Xbar optical beamformer according to a specific embodiment of the invention.

Besides, according to a further particular embodiment of the invention, in the WDM optical beamformer, multiple wavelengths are simultaneously transmitted to generate multiple beams based on the dispersion of the radiating elements, while each beam is further split into multiple controllable beams with the use of linear operation.

In addition, a multibeam microwave optical beamformer is developed by combining the Xbar chip with an electrical-optical and optical-electrical transformer, wherein according to a more particular embodiment of the invention, Xbar topology is used for the generation of multiple beams.

A homogeneous mixing for the IF signal extraction from optical carrier presented in C. Tsokos et al., "Analysis of a Multibeam Optical Beamforming Network Based on Blass Matrix Architecture," in Journal of Lightwave Technology, vol. 36, No. 16, pp. 3354-3372, 15 Aug, 2018 is used in optical to microwave transformation as well. Bis?!

According to an additional embodiment of the invention, the abovementioned multibeam LIDAR is combined with multibeam RADAR, which potentially enhances the detection and imaging systems in a multi-sensing platform for LIDAR and RADAR.

According to a still further embodiment of the invention, the abovementioned LIDAR architectures are also used for the generation of Multiple Input Multiple Output Free Space Optical Communication Links.

Further features of the invention are defined in corresponding subclaims appended herewith.

In summary, the optical beamforming device according to the present invention is for multiple beams is synthesised herewith as incorporating a universal optical linear crossbar architecture by means whereof the beams are controlled independently in terms of their amplitude and phase, which is remarkable in that it comprises a photonic crossbar linear optical circuit architecture comprising a coherent multiport interferometer on which it relies; the present invention further provides a method for carrying out said device wherein an 1:N splitter 1 followed by N e/o modulators provides N parallel optical signals that get subsequently launched into the Xbar matrix, with every signal entering through a respective waveguide row. Each row employs an optical coupling stage to every matrix column, so that part of the modulated optical signal gets forwarded into the respective column, the remaining part continues to the next column. The intra-column beams are then entering respective Variable Amplitude and Phase VAP modulation blocks designed as forming Xbar nodes, with each of them comprising an optical amplitude modulator followed by a phase modulator, thus generating the amplitude and phase adjustment of the propagating beam. After exiting the Xbar node, the intra-column optical beams are forced to coherently recombine in a N:1 recombination stage comprising a binary tree of couplers, esp. 3dB-couplers. More specifically, the N signals recombine sequentially in clusters of two at every combination stage until reaching the single waveguide output connected to a radiating element. This leads to the radiation from every I^{th} column of a sum of N orthogonal modulated amplitude- and phase-adjusted optical sub-signals The over-the-air combination of M radiated signals each consisting of N orthogonal signals leads to the generation of N radiating beams with each beam generated by an algebraic summation of orthogonal modulated sub-signals corresponding to every input port.

Further particulars and details of the present invention are incorporated in the appended drawings referred to below.

### Brief description of the drawings

Fig. 1 represents a first embodiment of a photonic Xbar architecture used according to the invention.
Fig. 2 represents a graph of an IL performance comparison with the SVD-Clements linear circuit showing total losses as a function of the number of inputs.
Fig. 3 represents a photographic view of the silicon photonic chip implementing a 4:1 single-column Xbar according to the invention.
Fig. 4 represents multibeam LiDAR architecture where multiple beams are generated by the employment of the Xbar architecture.
Fig. 5 represents the Xbar VAP node getting replaced by a WDM Xbar node when a WDM Xbar architecture is targeted.
Fig. 6 shows a LiDAR architecture using WDM Xbar topology for the generation of multiple beams.
Fig. 7 shows a RADAR architecture using Xbar topology for the generation of multiple beams.
Fig. 8 represents a schematic view of a device according to a further embodiment of the invention combining multibeam LIDAR with multibeam radar.

### Description

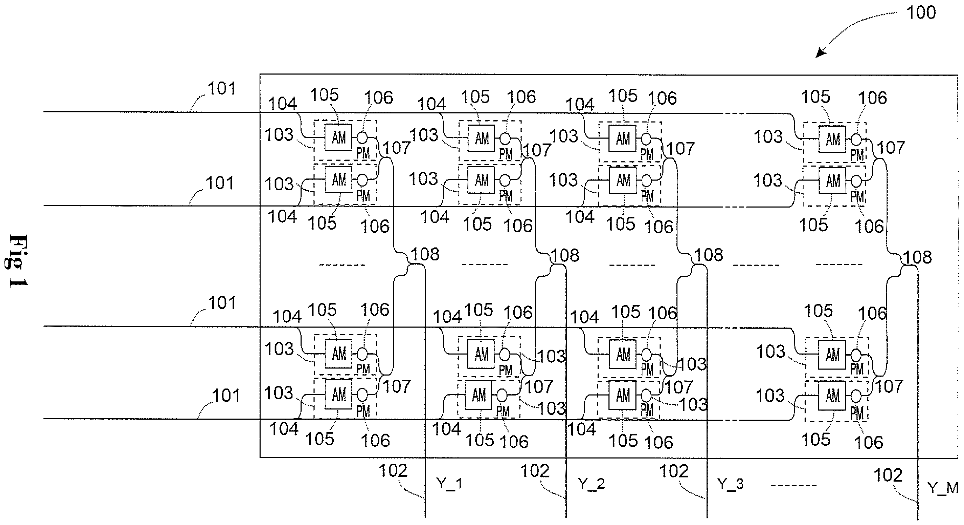

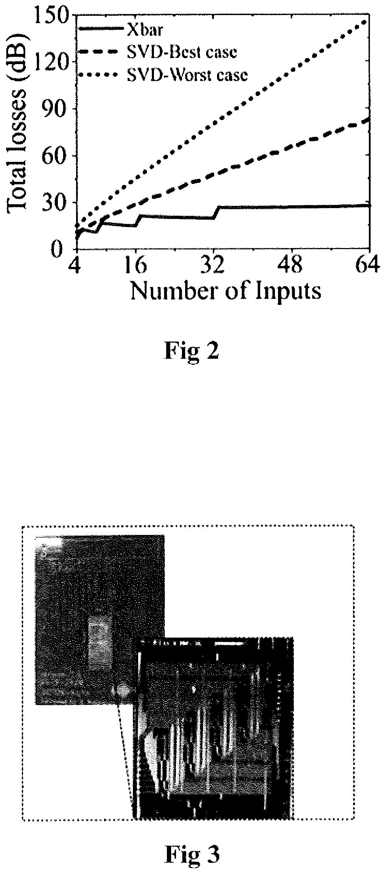

Fig. 1 shows schematically an optical beamforming architecture, adopting a universal optical linear crossbar architecture, which allows independent control of the beams, in terms of both amplitude and phase. A single-column crossbar layout is demonstrated in a small-scale 4x1 version shown in Fig. 3 in preliminary linear operation experiments for neuromorphic photonics applications offering low-loss and high accuracy metrics due to a non-cascaded configuration of the phase-shifter nodes [1].

A photonic Xbar linear optical circuit architecture relies on a coherent multiport interferometer and is illustrated schematically in Fig. 1 when configured to operate within a single-wavelength optical matrix-vector multiplication engine. In the transmitter mode, the input vector X is formed by an array of parallel elo orthogonal modulated signals directly fed to N rows 101 of Xbar and those generating N independent beams. Each of the rows employs an optical coupling stage 104 at each of the M matrix columns so that part of the orthogonal modulated optical signal gets forwarded into the respective column, while the remaining part is allowed to continue to the next column. The intra-column signals are then entering respective Variable Amplitude and Phase modulation blocks 103, termed as Xbar nodes and referred to as VAP, with each of them comprising an optical amplitude modulator 105 followed by a phase modulator 106, referred to as 105 and respectively 106, allowing in this way the amplitude and phase adjustment of the propagating beam. After exiting the Xbar node, the intra-column optical signal is then combined in an N:1 combination stage that comprises a binary tree of 3dB couplers. More specifically, the N signals recombine sequentially in clusters of two at every combination stage until reaching the single waveguide output connected to a radiating element 406. This leads to the radiation from every i-th column of a sum of N orthogonal modulated amplitude- and phase-adjusted optical sub-signals. For every orthogonal signal, its sub-signals radiated by each column will coherently add over-the-air generating a beam. In this way, for N **orthogonal** input signals, N beams will be generated.

In simple terms, the Xbar layout naturally extends the successful and powerful 1:M Optical Phase Array OPA paradigm into a NxM Optical Amplitude and Phase Matrix OAPM configuration through an overall 1:M splitting of the N input modulated beams and the use of N:1 recombination stages within every column, without requesting the employment of N different wavelengths and WDM technology for expanding to N rows, as has been the case in C. Tsokos, et al. "Optical Beamforming Network for Multi-Beam Operation With Continuous Angle Selection." PTL(2019).

Besides, the Xbar beamformer can be used in the reverse direction with signal entering M columns consequentially split by 1:N splitting stage that comprises a binary tree of optical Multi Mode Interferometer MMI or directional splitters 107,108 to generate N beams from M signal entering to M output ports. Each of the intra-column optical signals is then entering respective Variable Amplitude and Phase VAP modulation blocks 103, designated as Xbar nodes 4, with each of them comprising an optical phased modulator 106 followed by an amplitude modulator 105, allowing in this way the amplitude and phase adjustment of the intra-column optical signals. After the Xbar node, the signals at each row are combined in by directional couplers 104 with the combing ratio guaranteeing the equal amplitude combination leading to the generation of N independent beams.

These allow for an optical MBFN technology wherein:
one-to-one mapping between intended beam amplitude/phase adjustment values and respective Xbar matrix node entry is supported, avoiding phase interdependencies and unnecessary recalculations;
a completely reconfigurable amplitude and phase matrix can be sustained with zero phase errors;
additional beam shaping capabilities can be supported, since the capability to host VAP modulation blocks instead of simple phase modulation elements can utilize the amplitude modulation segments for significantly facilitating side lobe suppression; and
a high loss- and phase-induced fidelity architecture is supported, enabling a robust circuit layout where a perfect match between the targeted and the experimentally obtained linear transformation can be accomplished.

The Xbar configuration is shown to offer the lowest insertion loss IL performance compared to the SVD-Clements topology, which has been considered until recently to comprise the optimal linear optical circuit architecture, with Fig. 2 revealing that the IL performance gap can reach close to 60dB in the case of 64x64 matrix arrangements assuming 1dB losses per node.

Fig. 3 depicts the fabricated silicon-based chip that implements a single Xbar column and has been used for validating experimentally its successful operation as a matrix-vector multiplying engine in neuromorphic photonic experiments.

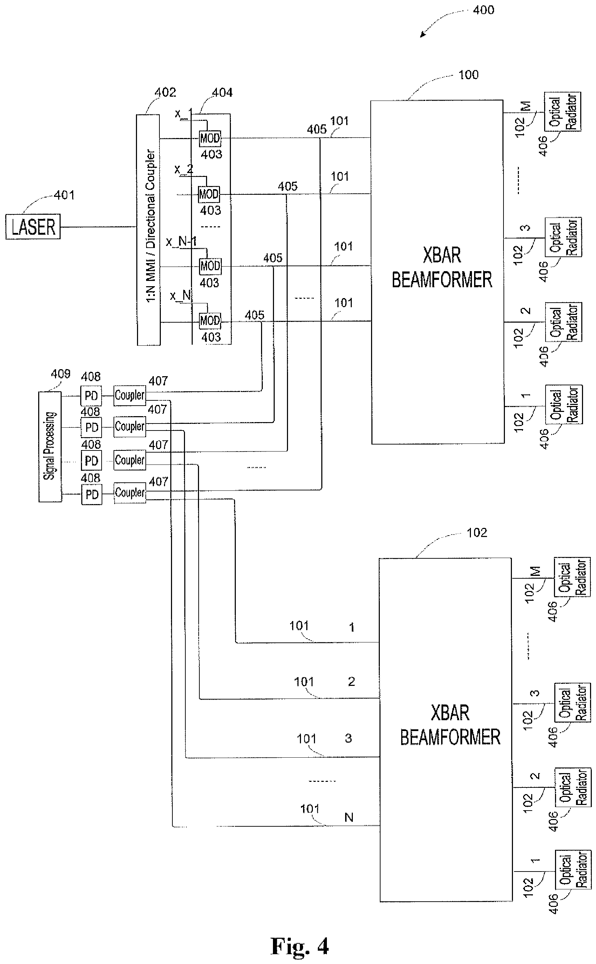

Fig. 4 shows the use of the Xbar multi beam beamformer in the implementation of a multi beam LiDAR configured to operate within a single-wavelength optical matrix-vector multiplication engine, with the input vector X formed by an array of parallel elo modulation stages MOD 404 located directly after a 1:N front-end splitter stage 402 with the single-wavelength lase 401 as an input. The 1:N splitter followed by the N e/o modulators provides N parallel optical beams that get subsequently launched to a splitter 405 with part of the signal transmitted to the receiver for LiDAR operation and into the Xbar matrix. The signals coming from the M outputs of the Xbar are connected to M optical radiators 406 for the transmission of the signals into the free space. The signal reflected by the target is then captured with similar optical devices and fed to the Xbar receiver for the generation of N beams. Next, the processed optical signals are coupled 407 to the signals coming directly from the transmitter fed to the N photodiodes 408. The photodiode output is then processed by the processing unit 409 and target metrics like shape, position, and velocity are estimated.

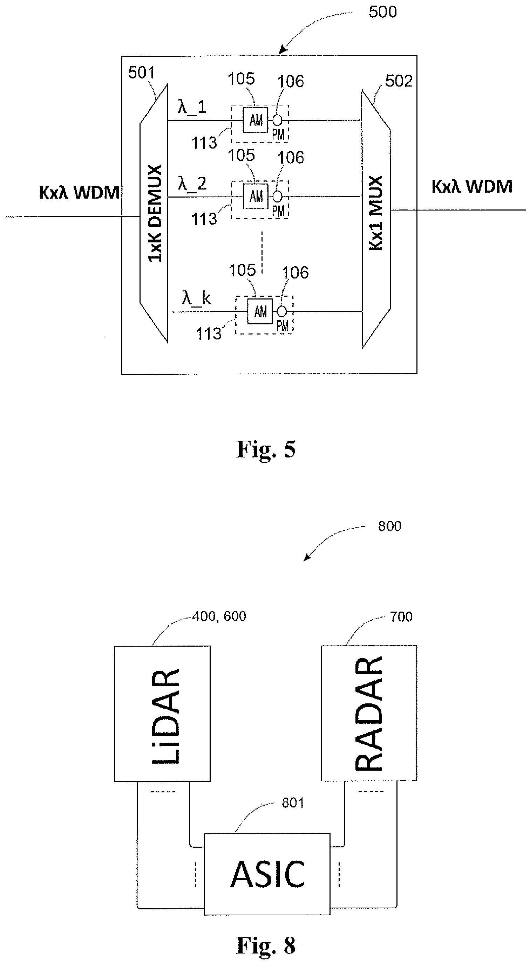

Fig. 5 shows a WDM Xbar node for multi-beam WDM operation. The Xbar can be transformed into a WDM-empowered beamformer. In the WDM Xbar node every column has to be equipped with a set of demultiplexing 5011multiplexing 502 stages where each wavelength is injected into a distinct set of weight modulator and phase shifter for individual beam shaping and beam steering, respectively.

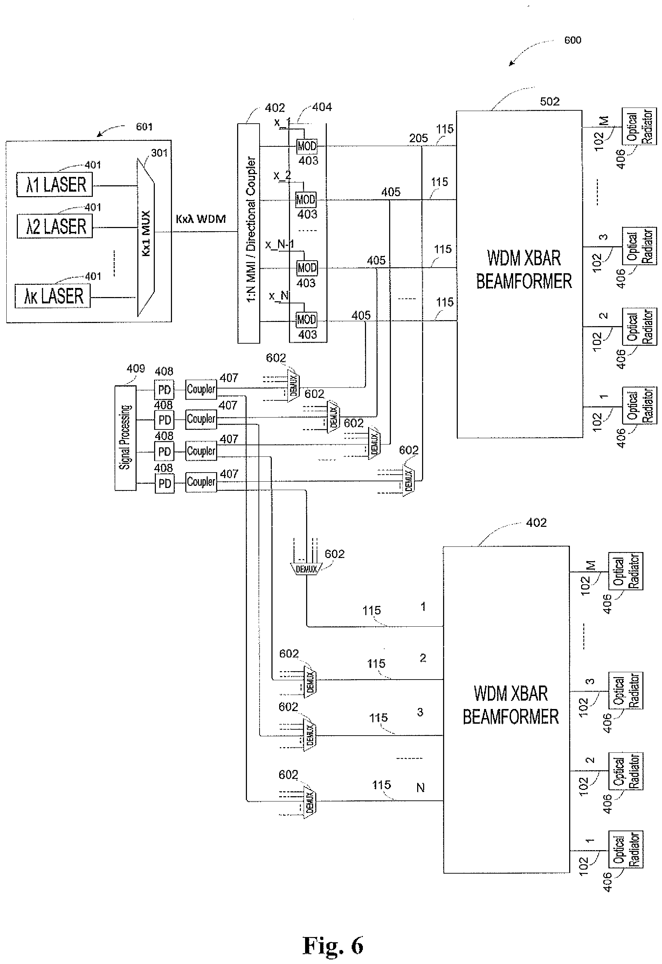

The WDM LIDAR architecture is shown in Fig. 6, where the WDM Xbar is the Xbar of Fig. 1 where the Xbar node is replaced by the WDM Xbar node and the optical WDM signal is generated by K lasers 401 multiplexed by Kx1 multiplexer 601. In order to process the WDM signals WDM demultiplexers 602 are included before the photodiodes for both directly coupled and received signals. The received and directly coupled demultiplexed signals are coupled 408 and fed to KxN photodiodes 408. The photodiode output is then processed by the processing unit 409 and target metrics like shape, position, and velocity are estimated.

The transmission of the WDM signal enables generation of K additional beam with the use of dispersive optical radiator, e.g. leaky wave based radiating gratings.

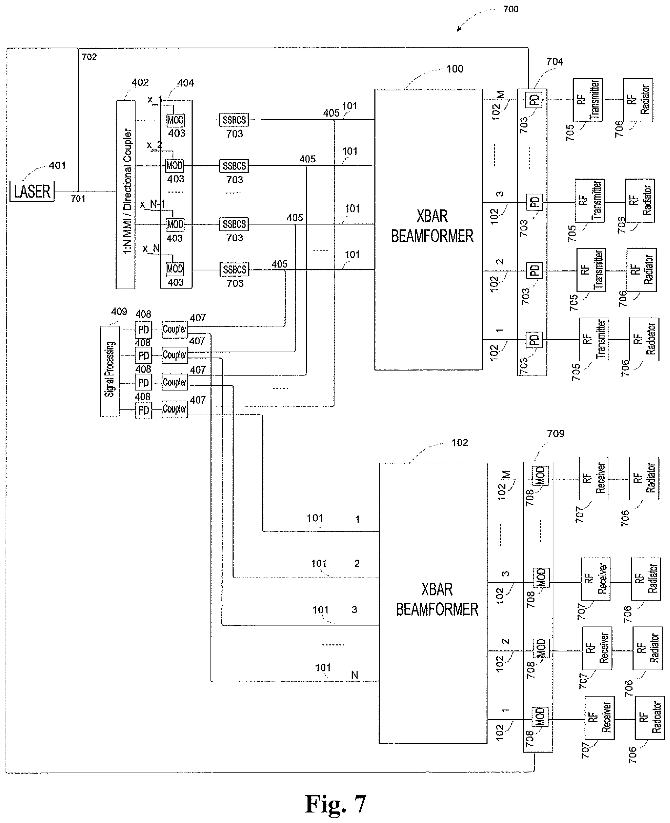

The Xbar can also be used as microwave optical beamforming architecture, as with the use of homodyne mixing of a sideband of the optically modulated signal with the original optical signal, the phase changes imposed by the optical beamformer can be transferred to the RF domain (C. Tsokos et al. in "Analysis of a Multibeam Optical Beamforming Network Based on Blass Matrix Architecture," in Journal of Lightwave Technology, vol. 36, No. 16, pp. 3354-3372, 15 Aug, 2018. The architecture of a RADAR based on an optical microwave beamformer for the generation of multiple beams is shown in Fig. 7, where the following modifications were performed compared to the LiDAR:
The laser signal is split into 1+2M parts 701,702. One signal is entering the 1:N MMl coupler while M signals are coupled to M the photodiodes PD 704 at the output of the Xbar and M signals are coupled to the modulators MOD 709 connected to the input of the Xbar at the receiver side. The modulated signals are than filtered by Single Side Band Carrie Suppression filters 703 and fed to the Xbar.

The photodiodes at the Xbar transmitter output are introduced for the conversion of the optical signal to electrical signals. The optical signal coupled directly from the laser to the PD guarantees phase preservation during the opto-electrical conversion stage. The obtained electrical signals are then filtered, amplified, and upconverted by the RF transmitters 707 and are fed to the RF radiators 708 for free space transmission.

The reflected from the target signal is received by similar RF radiators 706 and filtered, amplified, and down converted by the RF receiver 707. The M outputs of the RF receiver fed to M modulators 708 in order to modulate the M coupled form laser signals.

The obtained optical signals are then processed by Xbar and coupled 407 with the modulated signal coupled directly from the output of SSBCS of the transmitter to the receiver and fed to N photodiodes 408. Finally, the photodiodes outputs are processed by the processing unit, and target metrics like shape, position, and velocity are estimated.

A first application is referred to as PARALIA as a Horizon Europe project.

In the frame thereof, a multibeam lidar is developed based on the Xbar optical beamformer. In a remarkable embodiment of the invention, the use of Xbar topology is proposed for the generation of multiple simultaneous beams.

Besides, in a LiDAR-WDM, multiple wavelength simultaneous transmission for multiple beam generation in the horizontal plane is proposed, wherein WDM-Xbar was not used as beamformer so far.

In addition, a multibeam radar is developed by combining the Xbar chip with an electrical-optical and optical-electrical transformer, wherein according to a more particular embodiment of the invention, Xbar topology is used for the generation of multiple beams in the horizontal plane.

Combining the abovementioned multibeam LIDAR with multibeam RADAR can enhance the detection and imaging systems in a multi-sensing platform for Lidar and Radar.

A single-column crossbar layout is demonstrated in a small-scale 4x1 version shown in Fig. 3 in preliminary linear operation experiments for neuromorphic photonics applications offering low-loss and high accuracy metrics due to a non-cascaded configuration of the phase-shifter nodes as referred to above.

## Claims

1. Optical beamforming device for multiple beams incorporating a universal optical linear crossbar architecture by means whereof said beams are generated controlled independently in terms of their amplitude and phase, **characterized in that** said beams are orthogonal and **in that** said device comprises a photonic crossbar linear optical circuit architecture comprising an over-the-air coherent multiport interferometer on which it relies.

2. Device according to claim 1, **characterized in that** it comprises a one-to-one mapping between target beam amplitude/phase adjustment values and a respective Xbar matrix node entry being supported, whereby beams interdependencies and amplitude and phase values recalculations are disregarded.

3. Device according to claim 1 or 2, **characterised in that** it comprises an amplitude and phase matrix which is reconfigured, resp. sustained with zero phase errors.

4. Device according to one of the claims 1 to 3, **characterised in that** it comprises additional beam shaping capabilities, wherein Variable Amplitude and Phase (VAP) modulation blocks are hosted by means of amplitude modulation segments with side lobe suppression.

5. Device according to one of the claims 1 to 4, **characterised in that** it comprises a high loss- and phase-induced fidelity architecture, thereby generating a circuit layout matching a targeted linear transformation with an experimentally obtained linear transformation.

6. Device according to one of the claims 1 to 5, **characterized in that** said photonic Xbar linear optical circuit architecture is configured to operate within a single-wavelength optical matrix-vector multiplication engine, with the input vector X formed by an array of parallel elo modulation stages located directly after a 1 : N front-end splitter stage 1.

7. Device according to one of the claims 1 to 6, **characterized in that** for every orthogonal signal, it has sub-signals associated thereto that coherently add over-the-air, thereby generating a beam, whereby for N orthogonal input signals, N beams are generated.

8. Method for carrying out a device esp. as defined in any one of the preceding claims 1 to 7, **characterised by** the following steps:
- N parallel optical signals are provided by a 1 : N splitter (1) followed by N elo modulators (2), where the optical signals are modulated by mutually orthogonal electrical signals,
- subsequently, the modulated optical signals are launched into the Xbar matrix, with every signal entering through a respective waveguide row,
- wherein each of the rows employs an optical coupling stage (104) to every matrix column, so that a first part of the modulated optical signal gets forwarded into the respective column, while the second remaining part is allowed to continue to the next column,
- wherein the intra-column signals then enter respective Variable Amplitude and Phase (VAP) modulation blocks (103), designated as forming Xbar nodes (4), with each of them comprising an optical amplitude modulator (105) followed by a phase modulator (106), thus generating the amplitude and phase adjustment of the propagating signals,
- wherein after exiting the Xbar node, the intra-column orthogonal optical beams are then recombined in a N:1 combination stage that comprises a binary tree of optical couplers, especially 3 dB couplers.

9. Method according to the preceding claim 8, **characterized in that** the N signals are recombined sequentially in clusters of two at every combination stage until reaching the single waveguide output connected to a radiating element through which a sum of N **orthogonal** modulated amplitude- and phase-adjusted optical sub-signals is radiated from every i^{th} column, wherein for every orthogonal signal, its sub-signals radiated by each column coherently add **over-the-air,** thereby generating a beam, wherein for N **orthogonal** input signals N beams are generated.

10. Method according to claim 8 or 9, **characterized in that** the Xbar layout extends the 1:M Optical Phase Array (OPA) system into a NxM Optical Amplitude and Phase Matrix (OAPM) configuration through an overall 1:M splitting of the input modulated beams.

11. Method according to claim 8 or 9, **characterized in that** said Xbar layout naturally extends the 1:M Optical Phase Array (OPA) paradigm into a NxM Optical Amplitude and Phase Matrix (OAPM) configuration through the use of N:1 recombination stages within every column, whereas no use of N different wavelengths and WDM technology for expanding to N rows is carried out.

12. Use of the Xbar linear operator of a device according to one of the claims 1 to 7, as a receiver supporting the generation of multiple independently controlled orthogonal radiated beam.

13. Use of the Xbar optical beamformer *device* according to one of the claims 1 to 7 as a microwave optical beamformer by mixing a sideband of the optically modulated signal with the original optical signal uniformly, wherein phase changes are imposed by the optical beamformer wherein said phase changes are transferred to the RF domain.

14. Use of the Xbar optical beamformer device according to one of the claims 1 to 7 in a multibeam lidar, particularly wherein the Xbar topology is used for the generation of multiple simultaneous beams with an independent beam direction control.

15. Use of the Xbar optical beamformer device according to one of the claims 1 to 7, in a multibeam lidar, especially with the method according to claim 8 or 9, wherein the Xbar topology is used for the generation of multiple simultaneous beams with an independent beam direction control, with the following steps :
- N parallel optical signals are provided by a 1:N splitter followed by N e/o modulators, where the optical signals are modulated by mutually orthogonal electrical signals,
- the modulated optical signals are subsequently launched into the Xbar matrix, with every signal entering through a respective waveguide row,
- wherein each of the rows employs an optical coupling stage to every matrix column, so that a first part of the modulated optical signal gets forwarded into the respective column, while the second remaining part is enabled to continue to the next column,
- wherein the intra-column signals then enter respective Variable Amplitude and Phase (VAP) modulation blocks, designated as forming Xbar nodes, with each of them comprising an optical amplitude modulator followed by a phase modulator, thus generating the amplitude and phase adjustment of the propagating signals,
- wherein after exiting the Xbar node, the intra-column orthogonal optical beams are then recombined in a N:1 combination stage that comprises a binary tree of optical couplers, especially 3 dB couplers,
particularly wherein the N signals recombine sequentially in clusters of two at every combination stage until reaching the single waveguide output connected to a radiating element through which a sum of N orthogonal modulated amplitude- and phase-adjusted optical sub-signals is radiated from every i^{th} column, wherein for every orthogonal signal, its sub-signals radiated by each column coherently add over-the-air generating a beam, wherein for N orthogonal input signals N beams are generated.

16. Use of the Xbar multi beam beamformer in a device according to one of the claims 1 to 7, in in the implementation of a multi beam LiDAR configured to operate within a single-wavelength optical matrix-vector multiplication engine, with an input vector X formed by an array of parallel elo modulation stages MOD (404) located directly after a 1:N front-end splitter stage (402) with the single-wavelength lase (401) as an input, wherein the 1:N splitter followed by the N elo modulators provides N parallel optical beams that get subsequently launched to a splitter (405) with part of the signal transmitted to the receiver for LiDAR operation and into the Xbar matrix, wherein the signals coming from the M outputs of the Xbar are connected to M optical radiators (406) for the transmission of the signals into the free space, wherein the signal reflected by the target is then captured with similar optical devices and fed to the Xbar receiver for the generation of N beams, after which the processed optical signals are then coupled (407) to the signals coming directly from the transmitter fed to the N photodiodes (408), wherein the photodiode output is then processed by the processing unit (409) and target metrics notably including shape, position, and velocity are then estimated.

17. Use of the Xbar beamformer in a device according to one of the claims 1 to 7, in the reverse direction with the signal entering M columns, which are consequentially split by 1:N recombination stage that comprises a binary tree of an optical Multi Mode Interferometer MMI or directional splitters (107, 108) to generate N beams from M signal entering to M output ports, wherein each of the intra-column optical signals is then entering respective Variable Amplitude and Phase VAP modulation blocks (103), designated as Xbar nodes (4), with each of them comprising an optical amplitude modulator (106) followed by a phase modulator (105), wherein the amplitude and phase of the intra-column optical signals is adjusted,
wherein after the Xbar node, the signals are combined in rows with the combing ratio guarantying the equal amplitude combination ratio, thereby leading to the generation of N independent beams.

18. Use of WDM-Xbar as beamformer device according to one of the claims 1 to 7 with a method as defined in claim 8 or 9, with dispersive radiators in a LiDAR-WDM, thereby increasing the beam count by generating multiple beams per each wavelength of a WDM signal generated, particularly wherein in a LiDAR-WDM, said WDM-Xbar is used as beamformer, with multiple wavelength simultaneous transmission for multiple beam generation in a horizontal plane.

19. Use of a device according to one of the claims 1 to 7, esp. of a multibeam radar by combining an Xbar chip with an electrical-optical and optical-electrical transformer, wherein Xbar topology is used for the generation of multiple beams in the horizontal plane, in particular combining the abovementioned multibeam LIDAR with multibeam RADAR thereby enhancing the detection and imaging systems in multi-sensing platform for LIDAR and RADAR, particularly wherein said combination of the Xbar chip with electrical-optical and optical-electrical transformer is used for enhancing the detection and imaging systems in a multi-sensing platform for LIDAR and RADAR.

20. Fabricated silicon-based chip for use in a device according to one of the claims 1 to 7, esp. claim 1, **characterized in that** it implements a single Xbar column and wherein it is used for validating its operation as a matrix-vector multiplying engine in a neuromorphic photonic process.
